Europäisches Patentamt

European Patent Office

Office européen des brevets

(19)

(11) Veröffentlichungsnummer: **0 024 488**
A2

(12) # EUROPÄISCHE PATENTANMELDUNG

(21) Anmeldenummer: 80103421.6

(22) Anmeldetag: 19.06.80

(51) Int. Cl.³: **G 01 F 15/075**

(30) Priorität: 03.08.79 CH 7131 79

(43) Veröffentlichungstag der Anmeldung:
11.03.81 Patentblatt 81/10

(84) Benannte Vertragsstaaten:
AT DE FR GB IT SE

(71) Anmelder: Häny & Cie. AG.
Bergstrasse 103
CH-8706 Meilen(CH)

(72) Erfinder: Heimgartner, Hans
Lindenhofweg 1
CH-8645 Jona(CH)

(72) Erfinder: Wirz, Karl
Pfannenstilstrasse 188
CH-8706 Meilen(CH)

(74) Vertreter: Schaad, Walter F. et al,
Patentanwälte W.F. Schaad, V. Balass E.E. Sandmeier
Dufourstrasse 101
CH-8008 Zürich(CH)

(54) **Vorrichtung zum Ermitteln des Durchflusses in Rohrleitungen.**

(57) Die in einem Durchflussmessgerät (1) erzeugten analogen Messwertsignale werden über einen Analog-Digital-Wandler (13) einer Rechnereinheit (16) zugeführt. Die Rechnereinheit (16) addiert die empfangenen Digitalsignale und erzeugt in regelmässigen zeitlichen Abständen, z.B. alle drei Sekunden, ein Ausgangssignal, das der jeweiligen geförderten Totalmenge entspricht. Dieses Ausgangssignal dient zur Ansteuerung einer Anzeigeeinheit (23) und eines Druckers (21). In dieser Anzeigeeinheit (23) wird demzufolge die Totalmenge während einer gewissen Zeitspanne angezeigt. Andererseits bildet die Rechnereinheit (16) aufgrund der innerhalb einer bestimmten Zeitspanne, z.B. ebenfalls drei Sekunden, empfangenen Digitalsignale ein Mittelwertsignal, dad für den momentanen Durchfluss während dieser Zeitperiode kennzeichnend ist. Dieses Mittelwertsignal dient ebenfalls zur Ansteuerung der Anzeigeeinheit (23) und des Druckers (21). In der Anzeigeeinheit (23) wird somit auch die momentane Durchflussmenge angezeigt. Durch diese Verarbeitung der Messwertsignale durch die Rechnereinheit (16) auch dann eine richtige Ernmittlung der geförderten Menge ermöglicht, wenn das geförderte Medium mit sich stark ändernder Durchflussgeschwindigkeit durch die Rohrleitung strömt.

./...

EP 0 024 488 A2

Fig. 1

0024488

## Vorrichtung zum Ermitteln des Durchflusses in Rohrleitungen

Die vorliegende Erfindung betrifft eine Vorrichtung zum Ermitteln des Durchflusses eines von einer Pumpeneinrichtung mit sich ändernder Geschwindigkeit durch wenigstens eine Rohrleitung geförderten Mediums gemäss Oberbegriff des Anspruches 1, sowie eine Verwendung dieser Vorrichtung bei bautechnischen Injektionen zum Messen des Injektionsdrukkes und der injizierten Menge.

Aus der CH-PS 609 423 ist eine Einrichtung zum Injizieren eines Injektionsgutes in mehrere Bohrlöcher bekannt, bei der in der Zuleitung für jedes Bohrloch ein Durchfluss- und Druckmessgerät angeordnet ist. Diese Messgeräte sind an eine Auswerteeinrichtung angeschlossen, in welcher die Injektionsdrücke und die injizierte Menge angezeigt und/oder registriert werden. Da die aus Kolbenpumpen bestehende Pumpeneinrichtung das Injektionsgut mit erheblichen Schwankungen in der Durchflussgeschwindigkeit durch die Leitungen fördert, treten bei der Ermittlung des Durchflusses erhebliche Schwierigkeiten auf, welche ein genaues Bestimmen

A 3166

der tatsächlich in die einzelnen Bohrlöcher injizierten Menge nicht ohne weiteres möglich machen.

Der vorliegenden Erfindung liegt nun die Aufgabe zugrunde, eine Vorrichtung der eingangs genannten Art zu schaffen, welche auch bei sich stark änderndem Durchfluss ein genaues Erfassen der durch die Rohrleitung geförderten Mediummenge erlaubt.

Diese Aufgabe wird gemäss kennzeichnendem Teil des Anspruches 1 gelöst.

Die dem jeweiligen Durchfluss entsprechend in rascher Folge der Rechnereinheit zugeführten Messwertsignale werden in dieser Rechnereinheit verarbeitet, um Ausgangssignale für die Ansteuerung der Anzeige- bzw. Aufzeichnungseinrichtung zu erhalten. Da letztere bei sich rasch änderndem Durchfluss diesen Aenderungen nicht trägheitslos folgen können, werden für die Anzeige bzw. Aufzeichnung des jeweiligen momentanen Durchflusses in der Rechnereinheit während jeweils gegebenen, gleichbleibenden Zeitspannen Ausgangssignale erzeugt, die einem Mittelwert der in dieser Zeitspanne empfangenen Messwertsignale entsprechen. Somit kann der Durchfluss mit genügender Genauigkeit angezeigt und/oder aufgezeichnet werden. Für die Bestimmung der Totalmenge erfolgt jedoch im Gegensatz dazu im Rechner ein kontinuierliches Aufaddieren der erhaltenen Messwertssignale. Zur Anzeige dieser Totalmenge erzeugt der Rechner in bestimmten Zeitintervallen, die vorzugsweise mit den Zeitspannen für die erwähnte Mittelwertbildung zusammenfallen, Ausgangssignale, welche ein Anzeigen bzw.
Aufzeichnen der jeweiligen Totalmenge bewirken. Während
der Anzeige- bzw. Aufzeichnungsperiode wird somit die Addition der Messwertsignale fortgesetzt, so dass die Totalmenge jederzeit genau erfasst wird.

Im folgenden werden anhand der Zeichnung Ausführungsbeispiele des Erfindungsgegenstandes näher erläutert. Es
zeigt:

Fig. 1 ein Blockschaltbild einer Vorrichtung zum
Anzeigen und Aufzeichnen des Durchflusses
eines durch eine Rohrleitung geförderten
Mediums,

Fig. 2 eine schematische Seitenansicht eines Rohrleitungsabschnittes mit Durchfluss- und
Druckmessgerät, und

Fig. 3 schematisch und in Vorderansicht eine Auswertestation einer Vorrichtung zum Anzeigen und Aufzeichnen des Durchflusses eines
durch sechs parallel gespeiste Rohrleitungen geförderten Mediums.

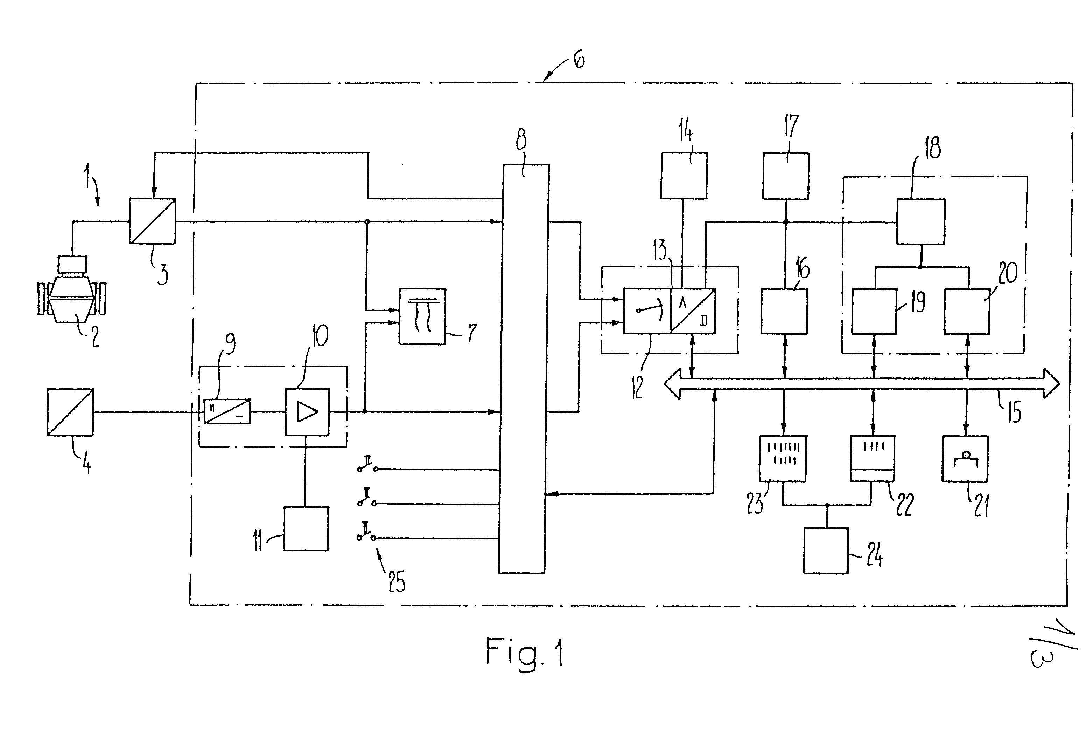

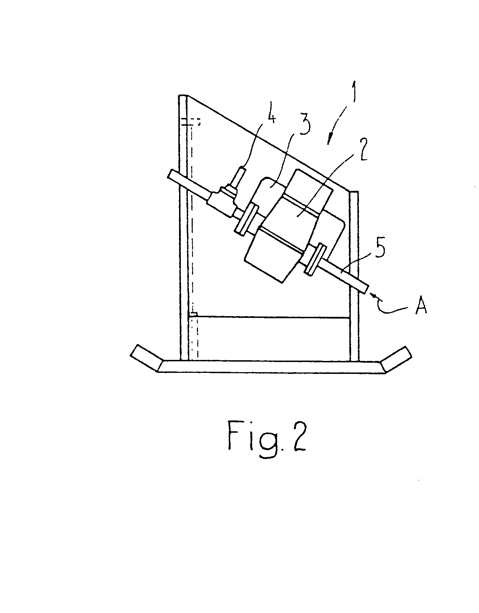

In der Fig. 1 ist im Blockschaltbild eine Vorrichtung gezeigt, welche ein Anzeigen und Aufzeichnen des Durchflusses
und des Druckes eines Injektionsmediums erlaubt. Dieses Injektionsgut wird auf nicht dargestellte, an sich bekannte Weise mittels einer Kolbenpumpe von einem Aufbereitungsbehälter über eine Rohrleitung zu einem Bohrloch gefördert. Zur Messung des Durchflusses bzw. des Druckes ist ein
Durchflussmessgerät 1 ansich bekannter Bauart, das einen
induktiven Messwertgeber 2 und einen Messumformer 3 aufweist, sowie ein Druckmessgerät 4 vorgesehen, das ebenfalls
bekannter Bauart ist. Wie die Fig. 2 zeigt, ist sowohl das
Durchflussmessgerät 1 wie das Druckmessgerät 4 in einem
ansteigenden Abschnitt der Rohrleitung 5 angeordnet. Dieser mit den beiden Messgeräten versehene Abschnitt der
Rohrleitung 5 steigt in Durchflussrichtung A des Mediums
an. Dadurch wird erreicht, dass dieser Rohrleitungsabschnitt immer gefüllt bleibt, um eine Verfälschung der
Messung zu verhindern. Zudem erlaubt diese Schrägstellung
des Rohrleitungsabschnittes ein einwandfreies Reinigen desselben. Das Durchflussmessgerät 1 bzw. das Druckmessgerät
4 erzeugt analoge Messwertsignale, die dem Durchfluss bzw.
dem Druck proportional sind.

Die beiden Messgeräte 1 und 4 sind über Signalleitungen
mit einer Auswertestation 6 verbunden. Die Ausgangssignale des Messumformers 3 werden einerseits einem Registriergerät 7, das im vorliegenden Fall ein Linienschreiber ist,
sowie einer Eingangsschaltung zugeführt, welche eine Signalanpassung vornimmt. Die Eingänge dieser Eingangsschaltung 8 sind mittels Optokopplern galvanisch voneinander
getrennt. Das Druckmessgerät 4 ist mit einem in der Auswertestation 6 untergebrachten Speisegerät für einen Zweileiterumformer verbunden, welches deswegen notwendig ist,
weil für die Druckmessung das Zweileitersystem angewendet wird. Die vom Druckmessgerät 4 erzeugten Messwertsignale gelangen zu einem Messverstärker 10, der mit einer Sample- und Hold- Schaltung versehen ist. Dieser Messverstärker 10 ist mit einer Speiseeinheit 11 verbunden. Diese Sample- und Hold-Schaltung hat die Aufgabe, nur die dem Maximaldruckwert entsprechenden Messwertsignale weiter zu leiten, da nur die Maximaldrücke registriert werden. Wird jedoch eine Registrierung des gesamten Druckverlaufes gewünscht, so kann diese Sample- und Hold- Schaltung ausgeschaltet werden. Die am Ausgang des Messverstärkers 10 erscheinenden Analogsignale werden einerseits dem Registriergerät 7 und andererseits der Eingangsschaltung 8 zugeführt. Das Registriergerät 7 zeichnet somit den Durchfluss und den Druckverlauf auf.

Von der Eingangsschaltung 8 gelangen die Analogsignale über eine Multiplexschaltung 12 zu einem Analog-Digital-Wandler 13, der die analogen Messwertsignale in Digitalsignale umwandelt. Der Wandler 13 ist einerseits mit einer Speiseeinheit 14 verbunden und andererseits an eine Datensammelleitung 15 angeschlossen. Mit dieser Datensammelleitung 15 ist weiter eine Rechnereinheit 16 verbunden, die auf noch zu beschreibende Weise die vom Wandler 13 erhaltenen Digitalsignale verarbeitet. Diese Rechnereinheit 16 ist zusammen mit dem Wandler 13 an eine weitere Speiseeinheit 17 angeschlossen. Im weitern ist eine Pufferbatterie 18 vorhanden, die mit dem Wandler 13, der Rechnereinheit 16 sowie mit einem Pufferspeicher 19 und einem Taktgeber 20 verbunden ist. Diese Pufferbatterie 18 dient zur Aufrechterhaltung der Stromversorgung bei Netzausfall und bei Trennung der Auswertestation 6 vom Netz. Im mit der Datensammelleitung 15 verbundenen Pufferspeicher 19 erfolgt eine Speicherung der auf noch zu beschreibende Weise erzeugten Uhrzeit sowie der von der Rechnereinheit 16 erzeugten, der totalen Fördermenge entsprechenden Signale. Die in diesem Pufferspeicher 19 gespeicherten Daten werden bei Ausfall der Stromversorgung bzw. beim Abtrennen der Auswerteeinheit 6 vom Netz während einer gewissen Zeit gespeichert. Der Taktgeber 20 erzeugt Taktsignale für die verschiedenen Bauteile, insbesondere zur Steuerung des durch die Rechnereinheit 16 festgelegten Programmablaufes.

Mit der Datensammelleitung 15 sind weiter ein Drucker 21, eine Zeiteinheit 22 sowie eine Durchfluss- und Totalmengenanzeige 23 verbunden. Die Zeiteinheit 22 und die Anzeigeeinheit 23 sind weiter an eine Speiseeinheit 24 angeschlossen.

In der Zeiteinheit 22, welche vom Taktgeber 20 Taktsignale empfängt, wird die Uhrzeit und das Datum (Tag und Jahr) ermittelt. Je nach Wahl erfolgt eine Anzeige der Uhrzeit oder des Datums. Mit dieser Zeiteinheit 22 lassen sich zudem die Ausdruckintervalle des Druckers 21 einstellen. Mit einem nicht dargestellten Zeiteinstellorgan kann an der Zeiteinheit 22 eingestellt werden, in welchen Zeitabständen der Drucker 21 die Daten ausdrucken soll. Der Drucker 21 druckt u.a. das Datum, die Uhrzeit, die momentane Durchflussmenge, die jeweilige Totalmenge und die Grösse des Druckes aus. In der Anzeigeeinheit 23 wird die jeweilige Durchflussmenge und die Totalmenge angezeigt.

Im folgenden wird nun die Funktionsweise der Vorrichtung gemäss den Fig. 1 und 2 erläutert, sofern sie nicht schon aus der vorhergehenden Beschreibung hervorgeht.

Die vom Durchflussmessgerät 1 und dem Druckmessgerät 4 erzeugten analogen Messwertsignale dienen einerseits zum Ansteuern des Registriergerätes 7 und werden andererseits über die Eingangsschaltung 8, die Multiplexschaltung 12, den Analog-Digital- Wandler 13 der Rechnereinheit 16 zugeführt. Die den Messwertsignalen des Druckmessgerätes 4 entsprechenden Ditigalsignale werden in der Rechnereinheit 16 für die Ansteuerung des Druckers 21 aufbereitet. Die Digitalsignale, welche den Ausgangssignalen des Durchflussmessgerätes 1 entsprechen, werden in der Rechnereinheit 16 einerseits zur Bildung von der Totalmenge entsprechenden Ausgangssignalen und andererseits zur Bildung von dem jeweiligen Durchfluss entsprechenden Ausgangssignalen verarbeitet. Zur Erzeugung der erstgenannten Ausgangssignale addiert die Rechnereinheit 16 die in kurzen Zeitabständen, z.B. alle 20ms ankommenden Digitalsignale und erzeugt in gegebenen Zeitabständen, z.B. alle 3 Sekunden, ein Ausgangssignal, das für die bis zu diesem Zeitpunkt geförderte Totalmenge kennzeichnend ist. Dieses Ausgangssignal dient nun zur Ansteuerung der Anzeigeeinheit 23 zwecks Anzeige dieser Totalmenge. Andererseits dient dieses Ausgangssignal zudem zur Ansteuerung des Druckers 21.

Um nun Ausgangssignale zu erzeugen, welche den jeweiligen Durchflussmengen entsprechen, bildet nun die Rechnereinheit 16 innnerhalb jeder von gleichlangen, aufeinanderfolgenden Zeitperioden von beispielsweise 3 Sekunden aufgrund der in einer Zeitperiode empfangenen Digitalsignale ein Mittelwertsignal, das als Ausgangssignal der Anzeigeeinheit 23 und allenfalls auch dem Drucker 21 zugeführt wird. Falls sich innerhalb einer Zeitperiode der sich wie vorstehend erwähnt ermittelte Mittelwert des Durchflusses gegenüber dem entsprechenden Mittelwert der vorangehenden Zeitperiode geändert hat, bewirkt dieses zweite Ausgangssignal der Rechnereinheit 16 eine entsprechende Aenderung der Anzeige der Durchflussmenge in der Anzeigeeinheit 23.

Der Drucker 21 druckt in den wie erwähnt vorgewählten Zeitabständen die jeweils gültigen Daten aus.

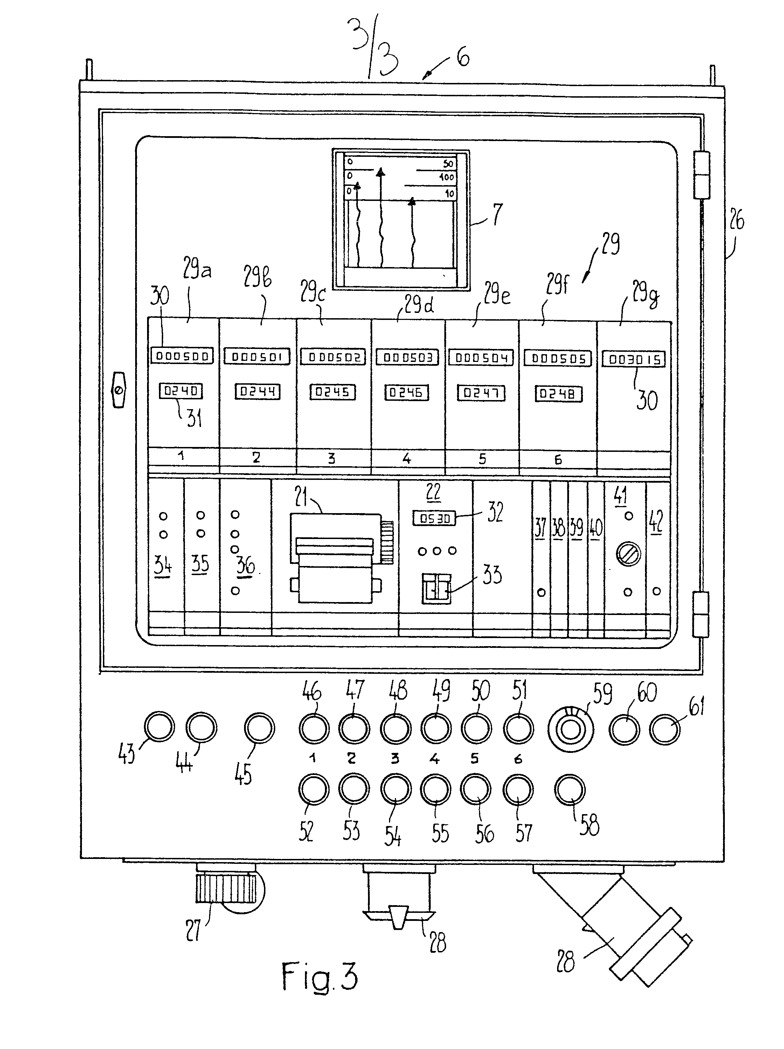

In diesen vorstehend beschriebenen Programmablauf kann durch Betätigen von entsprechenden Betätigungselementen 25 eingegriffen werden, die an der Auswertestation 6 vorgesehen sind. Auf diese Eingriffsmöglichkeiten wird anhand der Fig. 3 noch eingegangen werden.

Beim vorliegenden Ausführungsbeispiel ist das Durchflussmessgerät 1 mit zwei verschiedenen, umschaltbaren Messbereichen versehen. Aufgrund des durch die Rechnereinheit 16 ermittelten Mittelwertes des Durchflusses bewirkt nun diese Rechnereinheit 16 ein Umschalten auf denjenigen Messbereich, der dem jeweiligen Durchfluss entspricht.

Falls mehrere Bohrlöcher über jeweils von der Pumpeneinrichtung parallel gespeiste Rohrleitungen mit Injektionsgut versorgt werden, so kann zur Messung des Durchflusses und des Druckes in jeder dieser Rohrleitungen je ein Durchflussmessgerät 1 und ein Druckmessgerät 4 eingebaut werden. Alle diese Messgeräte werden an eine gemeinsame Auswertestation 6 angeschlossen, deren Aufbau und Wirkungsweise im wesentlichen der Auswertestation 6 gemäss Fig. 1 entspricht. Anhand der Fig. 3 wird eine solche Auswertestation noch erläutert werden. Im Gegensatz zu der in Fig. 1 gezeigten Ausführung wird jedoch für jede Rohrleitung eine Anzeigeeinheit 23 für die Anzeige der Totalmenge und des jeweiligen momentanen Durchflusses vorgesehen. Zudem ist weiter eine Anzeigeeinheit zur Anzeige der insgesamt durch alle Rohrleitungen geförderten Totalmenge vorgesehen. Es versteht sich, dass die diese Anzeigeeinheiten 23 und auch den Drucker 21 ansteuernde Rechnereinheit 16 dem Programm entsprechend ausgebildet werden muss. Der Drucker 21 druckt in diesem Fall die Daten (Druck, Durchflussmenge) für jede dieser Rohrleitungen aus.

Anstatt wie vorstehend erwähnt in jeder Rohrleitung ein Durchflussmessgerät und ein Druckmessgerät 4 anzuordnen, ist es auch möglich, eine Messleitung mit einem Durchflussmessgerät 1 und einem Druckmessgerät 4 vorzusehen. Diese Messleitung wird nun wahlweise und nacheinander mittels Umschaltventilen in die einzelnen von der Pumpeneinrichtung zu den Bohrlöchern führenden Rohrleitungen eingeschaltet, so dass das Injektionsgut in einer Rohrleitung durch die Messleitung fliesst. Die Auswerteeinheit 6 ist in diesem Fall ähnlich ausgebildet wie die vorstehend beschriebene Auswerteinrichtung, d.h. ebenfalls mit mehreren Anzeigeeinheiten 23. Selbstverständlich muss die Rechnereinheit 16 entsprechend ausgebildet werden, da die den einzelnen Rohrleitungen zugeordneten Messwertsignale im Gegensatz zum vorstehend erwähnten Fall nicht parallel sondern nacheinander anfallen.

In Fig. 3 ist in Vorderansicht ein Auswertegerät 6 gezeigt, das zu einer Vorrichtung zum Anzeigen und Registrieren des Durchflusses in sechs parallel gespeisten Rohrleitungen dient. In dieser Fig. 3 sind sich entsprechende Bauteile mit denselben Bezugszeichen versehen wie in Fig. 1. Die Auswertestation 6 weist ein Gehäuse auf, in dem die Bauteile untergebracht sind. Dieses Gehäuse 26 weist eine Steckdose für das zum Durchflussmessgerät 1 und zum Druckmessgerät 4 führende Signalkabel, sowie zwei Netzanschlusssteckdosen 28 auf. Das Registriergerät 7 weist drei Spuren auf, wovon eine zum Registrieren des Druckes und die beiden andern zur Aufzeichnung der Durchflussmenge dienen, wobei je nach eingestelltem Messbereich in der einen oder der andern Spur eine Aufzeichnung erfolgt. Unterhalb des Registriergerätes 7 ist der Anzeigeteil 29 für die Anzeige des momentanen Durchflusses und der Totalmenge angeordnet. Dieser Anzeigeteil 29 weist sieben nebeneinander angeordnete Anzeigeeinheiten 29a - 29g auf, von denen die Einheiten 29 a - 29f jeweils einer Rohrleitung 1 - 6 zugeordnet sind, während die Anzeigeeinheit 29g zur Anzeige der total durch alle Rohrleitungen geförderten Menge dient. Jede Anzeigeeinheit 29a-g ist dementsprechend mit einer To-

talmengenanzeige 30 versehen, während die Anzeigeeinheiten 29a - 29f zudem noch eine Durchflussmengenanzeige 31 aufweisen. Unterhalb des Anzeigeteils 29 ist der Drucker 21 und die Zeiteinheit 22 angeordnet. Letztere weist ein Anzeigefeld 32 auf, in welchem wie bereits erwähnt nach Wahl die Uhrzeit oder das Datum angezeigt wird. Mittels des Zeitvorwahlorganes 33 kann der zeitliche Abstand zwischen zwei Ausdrucken durch den Drucker 21 eingestellt werden. Seitlich des Druckers 21 und der Zeiteinheit 22 sind verschiedene Einschübe 34 - 42 angeordnet. Im Einschub 34 sind die Speiseeinheiten 17 und 24 und im Einschub 35 die Speiseeinheit 14 untergebracht. Der Einschub 36 enthält das Speisegerät 9, den Messverstärker 10 und die Speiseeinheit 11. Der Einschub 37 umfasst die Eingangsschaltung 8, der Einschub 38 eine Ausgangsschaltung, der Einschub 39 einen Spannungswandler und der Einschub 40 den Analog-Digital-Wandler 13. Im Einschub 41 ist die Pufferbatterie 18 und der Pufferspeicher 19 untergebracht, während der Einschub 42 die Rechnereinheit 16 enthält.

Im untern Teil der Auswertestation 6 sind verschiedene Betätigungsschalter angeordnet, von denen der Schalter 43 zum Anschalten der Auswertestation 6 an das Netz, der Schalter 44 zum Einschalten der Gerätebeleuchtung und der Schalter 45 zum Starten des Messvorganges dient. Wird das Gerät durch Betätigen des Schalters 43 an das Netz angeschlossen, so muss anschliessend während einer Aufwärmzeit von beispielsweise 10 Minuten mit der Messung zugewartet werden. Im Anzeigefeld 31 der Anzeigeeinheit 29a wird nun die jeweils noch abzuwartende Zeit angezeigt. Bei einer

Anzeige Null kann nun durch Betätigen des Schalters 45 mit der Messung begonnen werden. Durch Betätigen der einzelnen Bohrlochanwahlschalter 46 - 51 können die einzelnen Bohrlöcher bzw. Rohrleitungen für die Messung angewählt werden. Mittels der Tasten 52 - 58 können die einzelnen Anzeigeeinheiten 29a - 29g zurückgestellt werden. Durch Betätigen dieser Schalter 52 - 58 werden die Anzeigen 30, 31 auf Null zurückgestellt, wobei bei einer solchen Rückstellung die Zählerstände unter Angabe der Uhrzeit und des Datums durch den Drucker 21 ausgedruckt werden. Damit kann ein unbeabsichtigtes oder gar gewolltes Löschen der Information vermieden werden. Mittels des Drehschalters 59 wird das Registriergerät 7 auf eine der Rohrleitungen zugeschaltet, um den Durchfluss und den Druck in dieser ausgewählten Rohrleitung zu registrieren. Mittels des Schalters 60 kann der Druckbereich eingestellt werden. Will man ausserhalb der fest eingestellten Zeitintervalle einen Ausdruck erhalten, so muss der Schalter 61 betätigt werden, wodurch der Drucker 21 eingeschaltet wird.

Es versteht sich, dass er möglich ist, neben den vorstehend beschriebenen Funktionsabläufen noch weitere Abläufe vorzusehen.

Das Auswertegerät 6 für die Anzeige und Aufzeichnung des Durchflusses und des Druckes in einer Rohrleitung, wie das in der Fig. 1 dargestellt ist, sieht in Vorderansicht ähnlich aus wie die in Fig. 3 gezeigte Station, wobei selbstverständlich der Anzeigeteil 29 nur eine Anzeigeeinheit aufweist und die Anzahl der Schalter 43 - 61 entsprechend geringer ist.

Durch die beschriebene Art der Signalverarbeitung in der Rechnereinheit 16 wird erreicht, dass sowohl die Totalmenge wie auch die jeweilige Durchflussmenge auch dann einwandfrei angezeigt bzw. aufgezeichnet werden kann, wenn sich in Folge der Verwendung von Kolbenpumpen sowohl der Druck in den Rohrleitungen wie auch die Durchflussgeschwindigkeit und somit die Durchflussmenge sehr rasch und sehr stark ändert.

Obwohl sich die vorstehend beschriebene Vorrichtung vor allem zum Anzeigen und Aufzeichnen der Menge und des Druckes des bei bautechnischen Injektionen injizierten Gutes eignet, kann die erfindungsgemässe Vorrichtung auch überall dort eingesetzt werden, wo der Durchfluss und gegebenenfalls zusätzlich noch der Druck eines Mediums in einer Rohrleitung bestimmt werden muss, durch die dieses Medium mit sich stark ändernder Geschwindigkeit gefördert wird, wie das bei der Verwendung von Kolbenpumpen der Fall ist.

# PATENTANSPRUECHE

1.  Vorrichtung zum Ermitteln des Durchflusses eines von einer Pumpeneinrichtung mit sich ändernder Geschwindigkeit durch wenigstens eine Rohrleitung geförderten Mediums, mit einem in dieser Rohrleitung angeordneten, dem Durchfluss entsprechende Messwertsignale erzeugenden Durchflussmessgerät, an das eine die Messwertsignale verarbeitende Auswerteeinrichtung angeschlossen ist, in welcher aufgrund dieser Messwertsignale eine Anzeige und/oder Aufzeichnung der je Zeiteinheit und total durch die Rohrleitung geförderten Menge erfolgt, dadurch gekennzeichnet, dass die Auswerteeinrichtung (6) eine Rechnereinheit (16) aufweist, welche die empfangenen Messwertsignale addiert und in bestimmten Zeitabständen aufgrund dieser Addition der jeweiligen Gesamtmenge entsprechende erste Ausgangssignale und in jeder von aufeinanderfolgenden Zeitperioden aufgrund der in einer Zeitperiode erhaltenen Messwertsignale durch Mittelwertbildung zweite Ausgangssignale erzeugt, die für den jeweiligen Durchfluss in der entspre-

27.7.1979     A 3166 CH
Al:vm

chenden Zeitperiode kennzeichnend sind, wobei die ersten und zweiten Ausgangssignale zur Ansteuerung einer Anzeige- und/oder Aufzeichnungseinrichtung (21, 23) dienen.

2. Vorrichtung nach Anspruch 1 mit einem induktiven Durchflussmessgerät, dadurch gekennzeichnet, dass zwischen das Durchflussmessgerät (1) und die Rechnereinheit (16) ein Analog-Digital-Wandler (13) geschaltet ist.

3. Vorrichtung nach Anspruch 1 und 2 mit einem Durchflussmessgerät mit verschiedenen Messbereichen, dadurch gekennzeichnet, dass die Rechnereinheit (16) aufgrund des ermittelten Durchflusses eine Umschaltung des Messbereiches des Durchflussmessgerätes (1) bewirkt.

4. Vorrichtung nach einem der Ansprüche 1 - 3, dadurch gekennzeichnet, dass in der Rohrleitung (5) ein dem Druck des Mediums entsprechende Messwertsignale erzeugendes Druckmessgerät (4) angeordnet ist, das mit der Auswerteeinrichtung (6) zwecks Anzeige und/oder Aufzeichnung des Druckes verbunden ist.

5. Vorrichtung nach einem der Ansprüche 1 - 4, dadurch gekennzeichnet, dass die Aufzeichnungseinrichtung einen Drucker (21) aufweist, der in gegebenen Zeitabständen und/oder aufgrund eines entsprechenden Befehls Daten ausdruckt.

6. Vorrichtung nach einem der Ansprüche 1 - 5, dadurch gekennzeichnet, dass die Rechnereinheit (16) die ersten und zweiten Ausgangssignale jeweils gleichzeitig erzeugt.

7. Vorrichtung nach einem der Ansprüche 1 -6, dadurch gekennzeichnet, dass die Anzeigeeinrichtung (23, 29) nach dem Einschalten der Auswerteeinrichtung (6) die jeweils noch bis zur Inbetriebsetzung abzuwartende Zeit anzeigt.

8. Vorrichtung nach einem der Ansprüche 1 - 7 zum Ermitteln des Durchflusses eines parallel durch mehrere Rohrleitungen geförderten Mediums, wobei in jeder Rohrleitung ein Durchflussmessgerät und gegebenenfalls ein Druckmessgerät angeordnet ist, dadurch gekennzeichnet, dass alle Durchfluss- bzw. Druckmessgeräte (1, 4) an eine gemeinsame Auswerteeinrichtung (6) angeschlossen sind, deren Anzeigeeinrichtung (29) mehrere jeweils einer Rohrleitung zugeordnete Anzeigeeinheiten (29a - 29f) zur Anzeige der je Zeiteinheit und total durch die entsprechende Rohrleitung geförderten Menge sowie eine Anzeigeeinheit (29g) zur Anzeige der durch alle Rohrleitungen zusammen geförderten Totalmenge aufweist und deren Aufzeichnungseinrichtung vorzugsweise mit einem Drucker (21) zum Ausdrucken der den einzelnen Rohrleitungen zugeordneten Daten versehen ist.

9. Vorrichtung nach einem der Ansprüche 1 - 7 zum Ermitteln des Durchflusses eines parallel durch mehrere Rohrleitungen geförderten Mediums, dadurch gekennzeichnet, dass ein Durchflussmessgerät (1) und gegebenenfalls ein Druckmessgerät (4) in einer wahlweise in eine der Rohrleitungen einschaltbare Messleitung angeordnet ist, wobei die Anzeigeeinrichtung (29) mehrere jeweils einer Rohrleitung zugeordnete Anzeigeeinheiten (29a - 29f) zur Anzeige der je Zeiteinheit und total durch die entsprechende Rohrleitung geförderten Menge sowie eine Anzeigeeinheit (29g) zur Anzeige der durch alle Rohrleitungen zusammen geförderten Totalmenge aufweist und die Aufzeichnungseinrichtung vorzugsweise mit einem Drucker (21) zum Ausdrucken der den einzelnen Rohrleitungen zugeordneten Daten versehen ist.

10. Vorrichtung nach einem der Ansprüche 1 - 9, dadurch gekennzeichnet, dass zumindest der mit dem Durchfluss-bzw. Druckmessgerät versehene Abschnitt der Rohrleitung (5) in Durchflussrichtung (A) ansteigend angeordnet ist.

11. Verwendung der Vorrichtung gemäss Anspruch 1 bei bautechnischen Injektionen zum Messen des Injektionsdrukkes und der injizierten Menge.

Fig. 1

2/3

Fig. 2

Blatt 3

0024488

Fig.3